# EUROPÄISCHE PATENTSCHRIFT

(11) **EP 2 488 327 B1**
(45) Veröffentlichungstag und Bekanntmachung des Hinweises auf die Patenterteilung: **02.10.2013**
(21) Anmeldenummer: 10743098.5
(22) Anmeldetag: 10.08.2010
(51) Int. Cl.: B23Q 11/08

(54) **ABSCHIRMUNGSVORRICHTUNG AN EINEM BEARBEITUNGSKOPF SOWIE BEARBEITUNGSKOPF UND BEARBEITUNGSMASCHINE MIT EINER ABSCHIRMUNGSVORRICHTUNG**
PROTECTING DEVICE IN A MACHINING HEAD, MACHINING HEAD AND WORKING MACHINE WITH A PROTECTING DEVICE
DISPOSITIF DE PROTECTION DANS UN TETE D'USINAGE, TETE D'USINAGE AND MACHINE D'USINAGE AVEC UN DISPOSITIF DE PROTECTION

(30) Priorität: 13.10.2009 DE 202009013899 U
(43) Veröffentlichungstag der Anmeldung: 22.08.2012
(73) Patentinhaber: TRUMPF Werkzeugmaschinen GmbH & Co. KG, 71254 Ditzingen (DE)
(72) Erfinder: SCHMAUDER, Frank, 72555 Metzingen (DE); BREITLING, Detlef, 71229 Leonberg (DE); TRAENKLEIN, Dennis, 71155 Altdorf (DE); BURGHARDT, Stefan, 45772 Marl (DE)
(74) Vertreter: Kohler Schmid Möbus
(86) Internationale Anmeldenummer: PCT/EP2010/061610
(87) Internationale Veröffentlichungsnummer: WO 2011/045098

(56) Entgegenhaltungen:
- DE-A1- 2 557 591
- DE-U1- 20 110 570
- DE-U1- 29 819 985

## Beschreibung

Die Erfindung betrifft einen Bearbeitungskopf einer Bearbeitungsmaschine zum Bearbeiten von Werkstücken, an welchem ein Bearbeitungsstrahl austritt und der eine Abschirmungsvorrichtung aufweist, mittels derer der Bearbeitungsstrahl und/oder eine Bearbeitungsstelle des Bearbeitungsstrahls an einem Werkstück gegen die Umgebung abschirmbar ist, wobei die Abschirmungsvorrichtung wenigstens eine Abschirmungseinheit aufweist, die sich längs einer im Betrieb mit der Achse des Bearbeitungsstrahls zusammenfallenden Vorrichtungsachse erstreckt und die zumindest ein Abschirmungselement und eine das oder die Abschirmungselemente halternde Elementhalterung aufweist.

Die Erfindung betrifft des Weiteren eine mit einem Bearbeitungskopf der vorstehenden Art versehene Bearbeitungsmaschine.

Für die Bearbeitung von Werkstücken werden Bearbeitungsstrahlen unterschiedlicher Art eingesetzt. Beispielhaft zu nennen sind Bearbeitungsstrahlen in Form von Hochdruck-Wasserstrahlen, Plasmastrahlen und insbesondere Laserstrahlen. Zum Schutz von Mensch und Material sind die Bearbeitungsstrahlen und/oder deren Bearbeitungsstelle an dem betreffenden Werkstück gegen die Umgebung abzuschirmen. Dies geschieht beispielsweise mit Hilfe von Schutzkabinen, welche den gesamten Arbeitsbereich der Bearbeitungsmaschine umschließen. Derartige Schutzkabinen sind aber insbesondere bei der Werkstückhandhabung, etwa bei dem Be- und Entladen der Bearbeitungsmaschine, hinderlich. Aus diesem Grund werden anstelle von Schutzkabinen Abschirmungsvorrichtungen eingesetzt, die lokal auf den unmittelbaren Nahbereich des Bearbeitungsstrahls bzw. der Bearbeitungsstelle begrenzt sind.

Gattungsgemäßer Stand der Technik dieser Art ist bekannt aus DE 296 20 304 U1. Im Falle des Standes der Technik ist an dem Bearbeitungskopf einer Werkzeugmaschine eine Abschirmungsvorrichtung vorgesehen, die eine Abschirmungseinheit in Form einer ringförmigen Schutzbürste aufweist. Die Schutzbürste ist konzentrisch mit der Achse des Bearbeitungsstrahls und besitzt eine Basis, an der als Abschirmungselemente elastische Borsten angebracht sind. Die Borsten der Schutzbürste erstrecken sich längs der Achse des Bearbeitungsstrahls und schirmen diesen sowie die Bearbeitungsstelle in radialer Richtung des Bearbeitungsstrahls gegen die Umgebung ab. Mehrere in Umfangsrichtung der Schutzbürste verlaufende Borstenreihen liegen in radialer Richtung des Bearbeitungsstrahls hintereinander und sind zur Gewährleistung einer besonders wirksamen Abschirmung in Umfangsrichtung der Schutzbürste gegeneinander versetzt. Die gesamte Schutzbürste kann um den Bearbeitungsstrahl gedreht werden.

Weiterer Stand der Technik ist bekannt aus DE 298 19 985 U1 und DE 201 10 570 U1.

DE 298 19 985 U1 offenbart eine Lamellenabsaugvorrichtung zur Aufnahme von Spänen nahe eines Fräswerkzeugs von Holz- und Metallfräsmaschinen. Die Lamellenabsaugvorrichtung umfasst ein kastenartiges Gehäuse mit einer im Querschnitt rechteckigen Gehäuseöffnung. An zwei Seiten der Gehäuseöffnung ist an dem Gehäuse jeweils ein in Richtung des Absaugstromes verstellbarer Bürstenabweiser angeordnet. Die Bürstenabweiser haben die Aufgabe, die Abfuhr von Spänen von dem Fräswerkzeug zu verbessern. Zur Fixierung der Bürstenabweiser an dem Gehäuse sind Flügelschrauben vorgesehen, die ganz offensichtlich dazu dienen, die Bürstenabweiser vor Beginn der fräsenden Werkstückbearbeitung in einer während der Werkstückbearbeitung beibehaltenen Position an dem Gehäuse festzulegen.

DE 201 10 570 U1 betrifft ein Fängerelement zur Erfassung von Partikeln, insbesondere von Stäuben und Spänen, die an Werkzeugmaschinen zur spanenden Trockenbearbeitung, beispielsweise an Werkzeugmaschinen zur Holzbearbeitung, während des Bearbeitungsprozesses anfallen. Zur Anpassung an wechselnde Größen des für die Bearbeitung eingesetzten Werkzeuges kann die Geometrie des Fängerelementes verändert werden. Zu diesem Zweck weist ein Fängerelement eine Irisblendenmechanik mit mehreren Statorflächen auf. Zur Anpassung an den Durchmesser des eingesetzten Bearbeitungswerkzeuges wird vor Beginn einer fräsenden Werkstückbearbeitung die Position der Statorflächen mittels der Irisblendenmechanik derart variiert, dass sich innerhalb der das Bearbeitungswerkzeug umgebenden Statorflächen ein mehr oder weniger großer Freiraum ausbildet. Die Einstellung der Statorflächen ändert sich während der Werkstückbearbeitung nicht.

Die Aufgabe der vorliegenden Erfindung besteht darin, einen Bearbeitungskopf und eine Bearbeitungsmaschine mit einer verbesserten Abschirmung des Bearbeitungsstrahls und/oder der Bearbeitungsstelle des Bearbeitungsstrahls bereitzustellen.

Erfindungsgemäß gelöst wird diese Aufgabe durch den Bearbeitungskopf nach Anspruch 1 sowie durch die Bearbeitungsmaschine nach Anspruch 9.

Der erfindungsgemäße Bearbeitungskopf umfasst eine Abschirmungsvorrichtung mit zumindest zwei Abschirmungseinheiten, die relativ zueinander bewegt und dadurch relativ zueinander eingestellt werden können. Auf diese Art und Weise lässt sich die erfindungsgemäße Abschirmungsvorrichtung flexibel konfigurieren. Zur Realisierung von Relativbewegungen ist wenigstens eine der Abschirmungseinheiten ortsveränderlich auszuführen. Aufgrund der Flexibilität der erfindungsgemäßen Abschirmungsvorrichtung ist eine wirksame Abschirmung des Bearbeitungsstrahls und der Bearbeitungsstelle insbesondere auch bei wechselnden Geometrien der zu bearbeitenden Werkstücke gewährleistet. Wechselnde Werkstückgeometrien ergeben sich im Nahbereich eines Bearbeitungsstrahls beispielsweise dann, wenn das betreffende Werkstück eine uneinheitliche Geometrie besitzt und bei der Bearbeitung eine Relativbewegung von Werkstück und Bearbeitungsstrahl ausgeführt wird.

Da relativ zueinander bewegbare Abschirmungseinheiten in radialer Richtung der im Betrieb mit der Achse des Bearbeitungsstrahls zusammenfallenden Vorrichtungsachse gestaffelt sind, werden um den Bearbeitungsstrahl bzw. die Bearbeitungsstelle mehrere aufeinanderfolgende Abschirmungsebenen gebildet. Bewegt sich etwa ein Werkstück in radialer Richtung des Bearbeitungsstrahls durch eine der Abschirmungsebenen und entsteht dadurch an einer oder an der Abschirmungseinheit dieser Abschirmungsebene eine Abschirmungslücke, so kann diese Lücke dadurch geschlossen werden, dass sich eine Abschirmungseinheit einer anderen Abschirmungsebene in eine Position bewegt, in welcher ihre Abschirmungselemente die entstandene Abschirmungslücke überdecken. Der in radialer Richtung der Vorrichtungsachse bestehende gegenseitige Abstand der Abschirmungseinheiten wird zweckentsprechend gewählt.

Durch Relativbewegung von Elementhalterungen können die daran fixierten Abschirmungselemente etwa in Abhängigkeit von der Werkstückgeometrie derart positioniert werden, dass die Umgebung von dem Bearbeitungsstrahl und/oder von der Bearbeitungsstelle aus nicht bzw. nur in einem unschädlichen Umfang zugänglich ist. Als Abschirmungseinheiten in Frage kommen beispielsweise Bürsten, deren Borsten als Abschirmungselemente dienen. Als Abschirmungselemente denkbar sind darüber hinaus auch Ketten sowie quer zu der Werkstückoberfläche elastisch verformbare oder auslenkbare Elemente. Die Abschirmungselemente einer Abschirmungseinheit können beispielsweise in Gruppen angeordnet und/oder gegeneinander versetzt sein. Unabhängig von ihrer Bauart haben die Abschirmungselemente die Aufgabe, schädliche Emissionen aus dem Bereich des Bearbeitungsstrahls bzw. der Bearbeitungsstelle zu verhindern. Etwa bei der Werkstückbearbeitung mittels Laserstrahl ist die Umgebung gegen eine gesundheitsschädliche Lichtstrahlung abzuschirmen. Darüber hinaus kann die Notwendigkeit bestehen, bei der Werkstückbearbeitung anfallende schädliche Stoffe, etwa gesundheitsschädliche Dämpfe, und auch Produkte der Materialbearbeitung, etwa Materialspritzer, an dem Verlassen des unmittelbaren Nahbereichs des Bearbeitungsstrahls bzw. der Bearbeitungsstelle zu hindern. Die Laserbearbeitung von Werkstücken, insbesondere von Blechen, ist ein wesentliches Einsatzgebiet des erfindungsgemäßen Bearbeitungskopfes. Dieser kann beispielsweise an sogenannten "Kombi-Maschinen", d.h. an Maschinen mit einer Laser- sowie einer Stanz-/Umformeinheit ebenso vorgesehen sein wie an ausschließlich zur Laserbearbeitung dienenden Maschinen, etwa an Laser-Flachbettmaschinen.

Besondere Ausführungsarten der in den Ansprüchen 1 und 9 beschriebenen Erfindung ergeben sich aus den abhängigen Ansprüchen 2 bis 8 und 10 bis 13.

Die Relativbewegungen der Abschirmungseinheiten bzw. der betreffenden Elementhalterungen können erfindungsgemäß unterschiedlich gerichtet sein. In Frage kommen Relativbewegungen längs der Vorrichtungsachse (Anspruch 2), aber auch Relativbewegungen in Querrichtung der Vorrichtungsachse, insbesondere in deren Umfangsrichtung (Anspruch 3) sowie Relativbewegungen sowohl längs als auch in Querrichtung der Vorrichtungsachse. Die Beweglichkeit einer oder mehrerer Abschirmungseinheiten längs der Vorrichtungsachse kann auch dazu genutzt werden, auf das Werkstück einen entsprechend gerichteten Druck auszuüben. Mittels eines derartigen Drucks lässt sich etwa an plattenförmigen Werkstücken, insbesondere an Blechen, ein "Flattern" verhindern, wie es vor allem bei schnellen mit der Bearbeitung verbundenen Werkstückbewegungen zu befürchten wäre.

Im Falle einer weiteren bevorzugten Erfindungsbauart wird durch eine bewegungsmäßige Kopplung der betreffenden Elementhalterungen eine selbsttätige gegenseitige Positionierung von Abschirmungseinheiten realisiert (Anspruch 4). Wird eine der Elementhalterungen aus der von ihr eingenommenen Position ausgelenkt, so führt dies zwangsläufig dazu, dass eine andere Elementhalterung gleichfalls ihre Position verändert. Dabei ist die bewegungsmäßige Kopplung der Elementhalterungen derart auszuführen, dass eine Abschirmungslücke, die durch Positionsänderung einer der Elementhalterungen entsteht, in Folge der Positionsänderung der anderen Elementhalterung geschlossen wird.

Unabhängig davon, ob die Bewegungen verschiedener Abschirmungseinheiten bzw. Elementhalterungen miteinander gekoppelt oder voneinander entkoppelt sind, ist es zum Schließen entstehender Abschirmungslücken vielfach zweckmäßig, wenn sich die Abschirmungseinheiten bzw. die Elementhalterungen gegenläufig bewegen (Anspruch 5).

Zur Erzeugung der Relativbewegung von Abschirmungseinheiten bieten sich unterschiedliche Möglichkeiten. Der erforderliche konstruktive Aufwand ist minimal, wenn eine bei der Werkstückbearbeitung auszuführende Relativbewegung von Abschirmungsvorrichtung und Werkstück die Relativbewegung der Abschirmungseinheiten bzw. Elementhalterungen bewirkt (Anspruch 10). Es ist denkbar, dass die Abschirmungseinheiten gänzlich ohne motorischen Antrieb relativ zueinander positioniert werden. Eine bewegungsmäßige Kopplung von motorlos bewegten Abschirmungseinheiten ist denkbar, aber nicht zwingend erforderlich.

Im Interesse einer besonders großen Funktionssicherheit können Elementhalterungen von Abschirmungseinheiten erfindungsgemäß mittels eines motorischen Antriebes relativ zueinander bewegt werden (Anspruch 6). Von besonderem Vorteil ist dabei eine numerische Steuerung des motorischen Antriebes (Anspruch 11). Insbesondere kann die numerische Steuerung des motorischen Antriebes zur Erzeugung der Relativbewegung von Abschirmungseinheiten in die numerische Steuerung der Bearbeitungsmaschine integriert werden und dann mit weiteren Steuereinheiten der Maschinensteuerung zusammenwirken. Zweckmäßig ist beispielsweise eine Abstimmung der Relativbewegungen von Abschirmungseinheiten auf die Werkstückbewegung. Auf diese Art und Weise lässt sich die Konfiguration der Abschirmungsvorrichtung beispielsweise an wechselnde Werkstückgeometrien im Nahbereich des Bearbeitungsstrahls bzw. der Bearbeitungsstelle anpassen.

Die Geometrie der verwendeten Abschirmungseinheiten kann erfindungsgemäß variieren. Von Vorteil sind insbesondere Abschirmungseinheiten, welche die Vorrichtungsachse zumindest teilweise umgreifen (Anspruch 7). Im praktischen Einsatz bewährt haben sich insbesondere ringförmige Abschirmungseinheiten. Denkbar sind aber auch geradlinige Abschirmungseinheiten etwa in Form von quaderförmigen oder von walzenförmigen Bürsten. Auch derartige Abschirmungseinheiten lassen sich um den Bearbeitungsstrahl bzw. die Bearbeitungsstelle derart anordnen, dass sich eine allseitige Abschirmung ergibt.

Zweckmäßigerweise werden Abschirmungseinheiten mit in Querrichtung der Vorrichtungsachse nachgiebigen bzw. flexiblen Abschirmungselementen eingesetzt. Derartige Abschirmungselemente können sich wechselnden Werkstückgeometrien selbsttätig anpassen. Damit die Abschirmungselemente bei Relativbewegungen von Abschirmungsvorrichtung und Werkstück die Werkstückoberfläche verschleißarm überstreichen, übersteigt die Länge der Abschirmungselemente die Höhe des diese passierenden Werkstückes erheblich. Etwa die Länge von als Abschirmungselemente vorgesehenen flexiblen Borsten kann mindestens doppelt so groß sein wie die maximale Werkstückhöhe. Zwischen der Werkstückoberseite und dem an der betreffenden Elementhalterung fixierten Ende der Abschirmungselemente verbleibt folglich ein verhältnismäßig großer Abstand. Dieser Zwischenraum wird in bevorzugter Ausgestaltung der Erfindung durch eine geschlossene Abdeckung, vorzugsweise durch ein Abschirmungsblech, überdeckt (Anspruch 8). Die geschlossene Abdeckung sorgt dafür, dass oberhalb des Werkstückes eine wirksame Abschirmung auch dann sichergestellt ist, wenn die nachgiebigen Abschirmungselemente eine Ausrichtung erfahren, die mit der Bildung von Abschirmungslücken oberhalb des Werkstückes verbunden ist.

Von besonderer praktischer Bedeutung ist die Erfindung für Laserbearbeitungsmaschinen, an deren Laserbearbeitungskopf ein Laserbearbeitungsstrahl austritt (Anspruch 12). Von einem derartigen Laserbearbeitungsstrahl kann bei irregulären Betriebsbedingungen eine besondere Gefahr für Mensch und Material in der Umgebung der Bearbeitungsstelle ausgehen. Dies ist insbesondere dann der Fall, wenn der Laserbearbeitungsstrahl eine Wellenlänge besitzt, die nahe dem sichtbaren Bereich oder in dem sichtbaren Bereich, beispielsweise zwischen 0,2 µm und 3 µm, liegt. Derartige Laserbearbeitungsstrahlen werden beispielsweise von Festkörperlasern erzeugt. Infolgedessen wird die Erfindung vorzugsweise an Laserbearbeitungsmaschinen eingesetzt, deren Laserbearbeitungsstrahl von einem Festkörperlaser stammt (Anspruch 13). Laserstrahlen mit einem ähnlichen Wellenlängenbereich können aber auch durch andere aktive Medien erzeugt werden. Auch in diesen Fällen ist der Einsatz der erfindungsgemäßen Abschirmungsvorrichtung von Vorteil.

Nachfolgend wird die Erfindung anhand beispielhafter schematischer Darstellungen näher erläutert. Es zeigen:
- Figur 1: eine Gesamtansicht einer Bearbeitungsmaschine mit einem Bearbeitungskopf und mit einer Abschirmungsvorrichtung,
- Figur 2: die Abschirmungsvorrichtung gemäß Figur 1 in Einzeldarstellung,
- Figur 3: eine Schnittdarstellung der Abschirmungsvorrichtung gemäß den Figuren 1 und 2 mit dem angedeuteten Bearbeitungskopf,
- Figur 4: eine Schnittdarstellung einer Antriebsanordnung der Abschirmungsvorrichtung gemäß den Figuren 1 bis 3,
- Figur 4a: eine modifizierte Ausführungsform der Abschirmungsvorrichtung gemäß den Figuren 1 bis 4,
- Figur 5: eine Situation bei der Bearbeitung einer mit einer Umformung versehenen Blechtafel an der Bearbeitungsmaschine gemäß Figur 1,
- Figur 6: Abschirmungseinheiten einer Abschirmungsvorrichtung zweiter Bauart,
- Figur 7: Abschirmungseinheiten einer Abschirmungsvorrichtung dritter Bauart,
- Figur 8: Abschirmungseinheiten einer Abschirmungsvorrichtung vierter Bauart,
- Figur 9: eine Abschirmungseinheit einer Abschirmungsvorrichtung fünfter Bauart,
- Figur 10: eine Abschirmungseinheit einer Abschirmungsvorrichtung sechster Bauart und
- Figur 11: Abschirmungseinheiten einer Abschirmungsvorrichtung siebter Bauart.

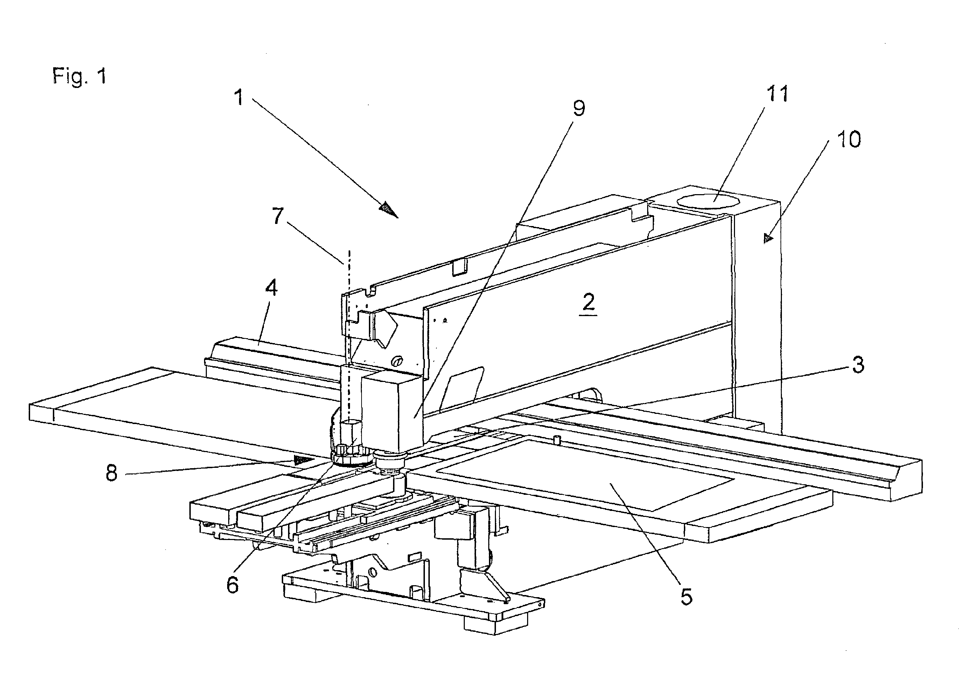

Figur 1 ist eine Bearbeitungsmaschine 1 in Form einer sogenannten "Kombi-Maschine" zu entnehmen, an welcher sowohl eine Laserbearbeitung als auch ein Stanzen/Umformen von Werkstücken möglich ist. Die Bearbeitungsmaschine 1 weist ein C-förmiges Maschinengestell 2 mit einem Rachenraum 3 auf, in welchem eine Koordinatenführung 4 üblicher Bauart angeordnet ist. An der Koordinatenführung 4 ist als zu bearbeitendes Werkstück eine Blechtafel 5 festgelegt.

Der obere Gestellschenkel des Maschinengestells 2 trägt an seinem freien Ende einen als Laserbearbeitungskopf ausgeführten Bearbeitungskopf 6. Um diesen herum ist eine längs einer Vorrichtungsachse 7 bewegbare bzw. positionierbare Abschirmungsvorrichtung 8 angeordnet. Diese ist an dem Maschinengestell 2 montiert und wird bei Bewegungen längs der Vorrichtungsachse 7 an dem Maschinengestell 2 geführt. Der Bearbeitungskopf 6 ist getrennt von der Abschirmungsvorrichtung 8 gleichfalls in Richtung der Vorrichtungsachse 7 bewegbar und zustellbar. Neben dem Bearbeitungskopf 6 ist an dem oberen Gestellschenkel des Maschinengestells 2 eine Stanz-/Umformstation 9 vorgesehen, mittels derer stanzende, prägende sowie umformende und biegende Werkstückbearbeitungen durchgeführt werden können.

Bei der Laserbearbeitung an der Bearbeitungsmaschine 1 wird die Blechtafel 5 in bekannter Weise mittels der Koordinatenführung 4 unter dem Bearbeitungskopf 6 und dabei relativ zu einem in Figur 1 nicht sichtbaren Laserbearbeitungsstrahl verfahren. Die Achse des Laserbearbeitungsstrahls fällt mit der Vorrichtungsachse 7 zusammen.

Anstelle eines Laserbearbeitungskopfes kann als Bearbeitungskopf 6 auch beispielsweise ein Hochdruck-Wasserstrahl-Bearbeitungskopf oder ein Plasmabearbeitungskopf vorgesehen sein.

Alle wesentlichen Funktionen, insbesondere sämtliche Antriebe der Bearbeitungsmaschine 1 werden durch eine numerische Maschinensteuerung 10 gesteuert, in welche unter anderem eine numerische Steuereinheit 11 der Abschirmungsvorrichtung 8 integriert ist.

Der an dem Bearbeitungskopf 6 austretende Laserstrahl wird von einem nicht gezeigten Festkörperlaser erzeugt und dem Bearbeitungskopf 6 über einen Lichtleiter zugeführt.

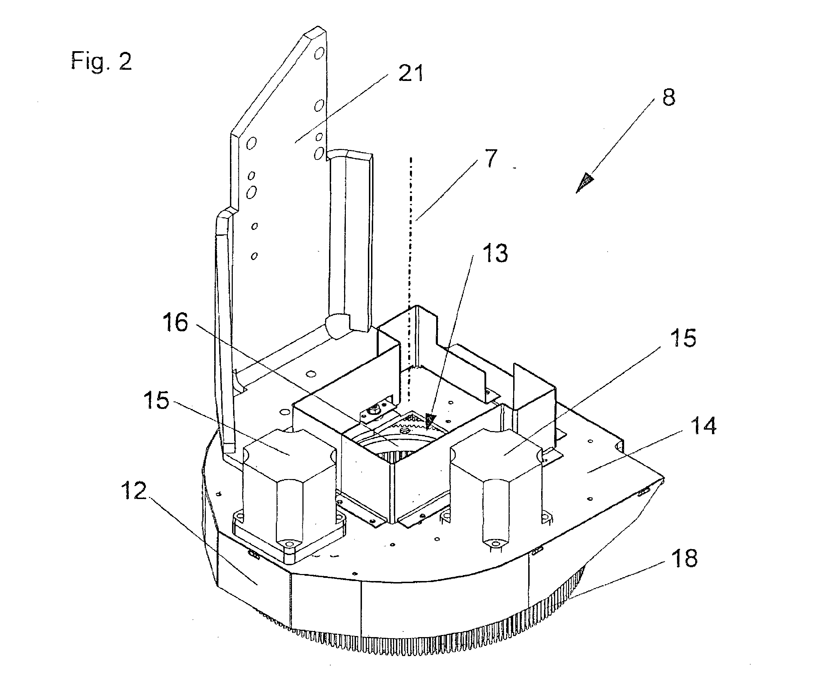

Figur 2 zeigt die Abschirmungsvorrichtung 8 im Detail. Demnach ist die Abschirmungsvorrichtung 8 mit einer als Abschirmungsblech ausgeführten geschlossenen Abdeckung 12 versehen, welche den an dem Bearbeitungskopf 6 austretenden Bearbeitungsstrahl und/oder dessen Bearbeitungsstelle an der Blechtafel 5 teilweise gegen die Umgebung abschirmt.

In Figur 2 weitgehend verdeckt sind Abschirmungseinheiten 13, von denen die Abschirmungsvorrichtung 8 insgesamt vier umfasst und die als mit der Vorrichtungsachse 7 konzentrische Bürsten ausgeführt sind. An einer Grundplatte 14 der Abschirmungsvorrichtung 8 sind die Abschirmungseinheiten 13 gelagert und um die bei Betrieb des Bearbeitungskopfes 6 mit der Laserstrahlachse zusammenfallende Vorrichtungsachse 7 drehbar geführt. Zum Drehantrieb der Abschirmungseinheiten 13 dienen Antriebsmotoren 15, die von der Steuereinheit 11 numerisch gesteuert werden.

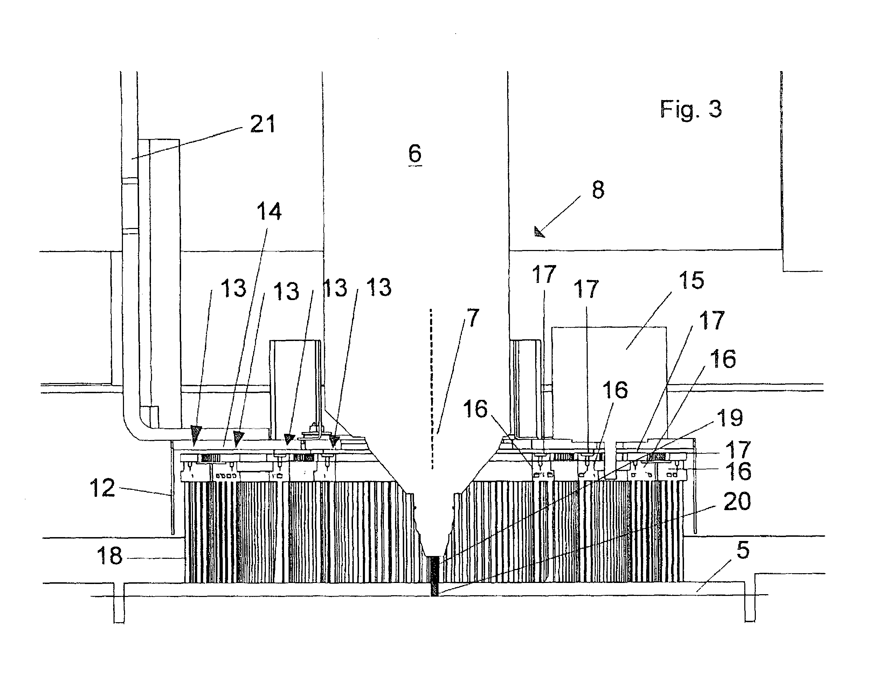

Ringförmig ausgebildete Elementhalterungen 16 der Abschirmungseinheiten 13 sind an ihrer zu der Grundplatte 14 der Abschirmungsvorrichtung 8 hin liegenden Seite jeweils mit einem Zahnkranz 17 versehen (Figur 3). An der dem Zahnkranz 17 gegenüberliegenden Seite haltern die Elementhalterungen 16 Abschirmungselemente 18 in Form von elastischen Borsten, die sich längs der Vorrichtungsachse 7 erstrecken.

Figur 3 zeigt die vier in radialer Richtung der Vorrichtungsachse 7 gegeneinander versetzten Abschirmungseinheiten 13 der Abschirmungsvorrichtung 8. Die Abschirmungselemente 18 der Abschirmungseinheiten 13 schirmen einen in Figur 3 angedeuteten Bearbeitungsstrahl 19, im gezeigten Beispielsfall einen Laserbearbeitungsstrahl, und dessen Bearbeitungsstelle 20 an der Blechtafel 5 gegen die Umgebung ab. Im Betrieb taucht der Bearbeitungskopf 6 durch eine zentrale Öffnung der Grundplatte 14 in die Abschirmungsvorrichtung 8 ein. Über einen Haltewinkel 21 ist die Abschirmungsvorrichtung 8 an dem Maschinengestell 2 der Bearbeitungsmaschine 1 gelagert und dabei in Richtung der Vorrichtungsachse 7 zustellbar geführt.

Die Abschirmungseinheiten 13 sind um die Vorrichtungsachse 7 relativ zueinander bewegbar.

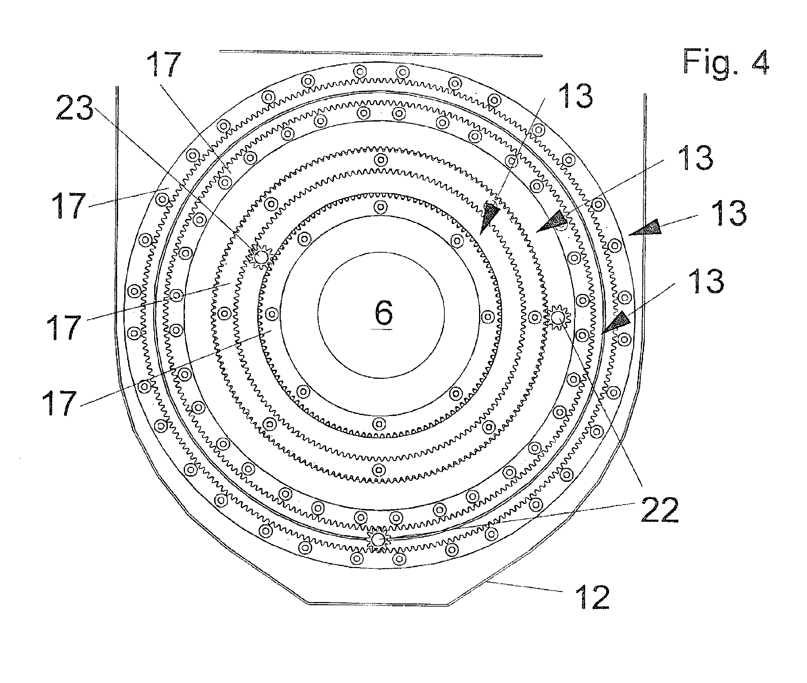

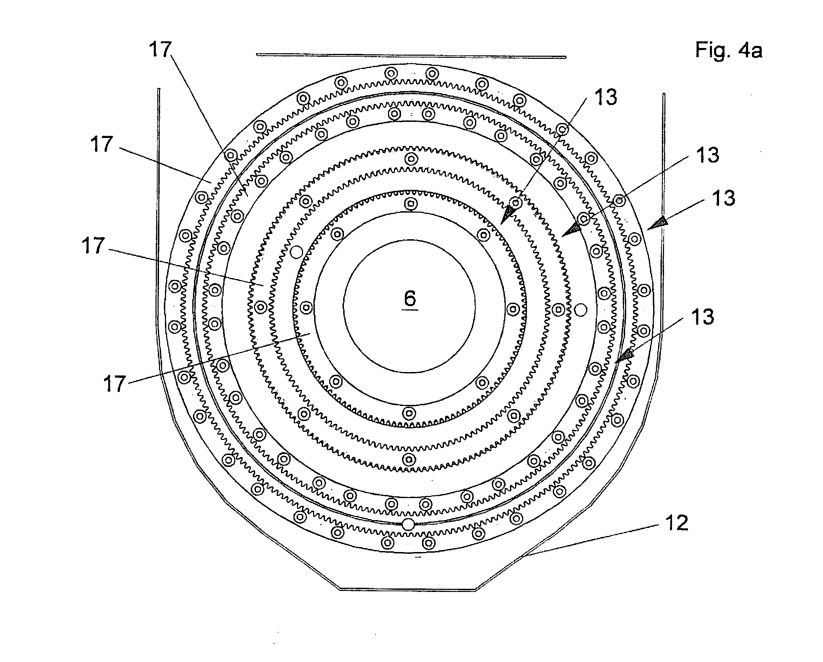

Die Relativbewegungen der Abschirmungseinheiten 13 können zum einen mittels der Antriebsmotoren 15 (Figuren 1 bis 4) aber auch motorlos (Figur 4a) bewirkt werden. Wird etwa die Blechtafel 5 vor oder während der Werkstückbearbeitung mittels der Koordinatenführung 4 relativ zu der Abschirmungsvorrichtung 8 bewegt, so kann die Blechtafel 5 die Abschirmungseinheiten 13 relativ zueinander in Bewegung versetzen. Alternativ besteht die Möglichkeit, dass die Abschirmungseinheiten 13 mittels der Antriebsmotoren 15 relativ zueinander bewegt werden. Der Antrieb der Abschirmungseinheiten 13 erfolgt in diesem Fall über Antriebsritzel 22 (Figur 4), die auf den Motorwellen der Antriebsmotoren 15 aufsitzen und mit zugeordneten Zahnkränzen 17 an den Abschirmungseinheiten 13 kämmen. Im Falle eines motorlosen Antriebes kann auf die Antriebsmotoren 15 und deren Antriebsritzel 22 verzichtet werden (Figur 4a).

Bei motorischem Antrieb der Abschirmungseinheiten 13 gemäß Figur 4 werden einander in radialer Richtung der Vorrichtungsachse 7 benachbarte Abschirmungseinheiten 13 gegenläufig um die Vorrichtungsachse 7 gedreht. Im Falle der in Figur 4 radial außen liegenden Abschirmungseinheit 13 und der dieser benachbarten Abschirmungseinheit 13 wird die gegenläufige Drehbewegung mittels des Antriebsritzels 22 bewirkt, das in die Zahnkränze 17 beider Abschirmungseinheiten 13 eingreift und die beiden Abschirmungseinheiten 13 bewegungsmäßig miteinander koppelt.

An den beiden radial innen liegenden Abschirmungseinheiten 13 erfolgt die Drehrichtungsumkehr gemäß Figur 4 mittels eines Getrieberitzels 23, welches in die Zahnkränze 17 beider Abschirmungseinheiten 13 eingreift und über keinen eigenen motorischen Antrieb verfügt. Für den motorischen Antrieb der beiden innen liegenden Abschirmungseinheiten 13 sorgt das motorisch angetriebene Antriebsritzel 22, welches mit dem Zahnkranz 17 an der äußeren der beiden innen liegenden Abschirmungseinheiten 13 kämmt.

Mittels der numerischen Steuereinheit 11 bzw. der Maschinensteuerung 10 kann die Relativbewegung der Abschirmungseinheiten 13 gesteuert werden. Insbesondere lässt sich die Drehbewegung der Abschirmungseinheiten 13 auf die Bewegung der Blechtafel 5 relativ zu der Abschirmungsvorrichtung 8 abstimmen. So besteht beispielsweise die Möglichkeit, die Drehbewegung der Abschirmungseinheiten 13 derart an die Blechbewegung anzupassen, dass auf der Blechtafel 5 aufsitzende Abschirmungselemente 18 der Blechtafel 5 folgen und daher trotz der Bewegung der Blechtafel 5 nicht seitlich ausgelenkt werden sondern vielmehr ihre vertikale Ausrichtung beibehalten, bei welcher eine optimale Abschirmung des Bearbeitungsstrahles 19 bzw. der Bearbeitungsstelle 20 gewährleistet ist.

Gemäß Figur 4a sind die Abschirmungseinheiten 13 nicht nur motorlos sondern auch bewegungsmäßig voneinander entkoppelt. Antriebsritzel 22 und Getrieberitzel 23 der in Figur 4 gezeigten Art sind nicht vorgesehen. Im Übrigen stimmen die Anordnungen der Figuren 4 und 4a miteinander überein. Aufgrund einer Relativbewegung der Blechtafel 5 und der Abschirmungseinheiten 13 können letztere gleich- aber auch gegensinnig rotieren. Allein aufgrund der genannten Relativbewegung positionieren sich die Abschirmungseinheiten 13 gemäß Figur 4a derart, dass der Bearbeitungsstrahl 19 und dessen Bearbeitungsstelle 20 wirksam gegen die Umgebung abgeschirmt sind.

Anstelle der in den Figuren 4, 4a gezeigten vier Abschirmungseinheiten 13 sind auch drei relativ zueinander drehbewegliche Abschirmungseinheiten 13 denkbar.

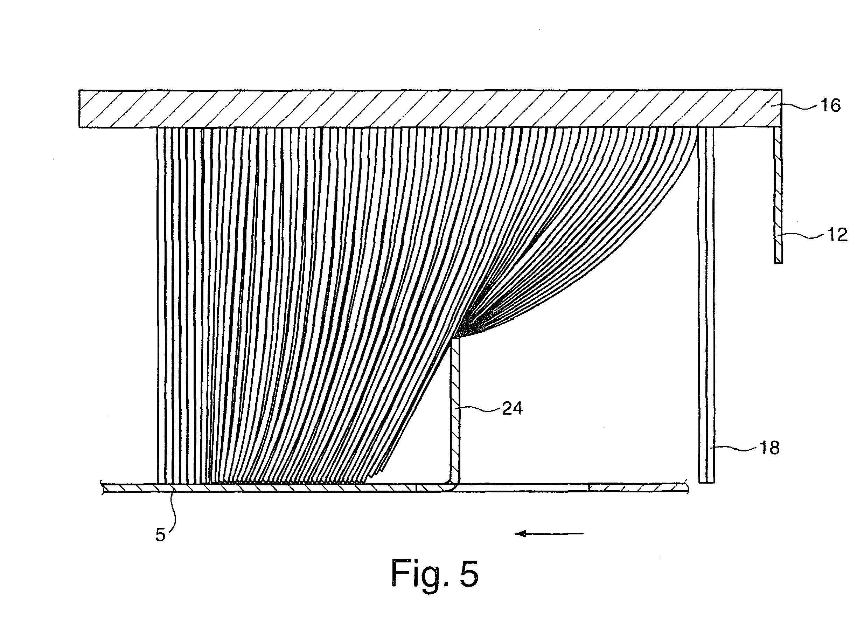

Die geschlossene Abdeckung 12 ist von der Blechtafel 5 und dementsprechend auch von den freien Enden der Abschirmungselemente 18 in Richtung der Vorrichtungsachse 7 beabstandet. Der Abstand zwischen dem unteren Rand der Abdeckung 12 und der Blechtafel 5 ist derart bemessen, dass die Blechtafel 5 auch dann unter der Abdeckung 12 hindurchbewegt werden kann, wenn sie - wie in Figur 5 angedeutet - mit einer Abkantung 24 versehen ist. Die Abkantung 24 lenkt bei Relativbewegungen gegenüber der Abschirmungsvorrichtung 8 bzw. dem Bearbeitungskopf 6 borstenartige Abschirmungselemente 18 der Abschirmungsvorrichtung 8 in Bewegungsrichtung (Pfeil in Figur 5) aus. Infolgedessen können sich oberhalb der Abkantung 24 Lücken in der von den Abschirmungselementen 18 gebildeten Abschirmung ergeben. Derartige Abschirmungslücken werden durch die Abdeckung 12 abgedeckt. Die Abdeckung 12 minimiert folglich den Winkel, unter weichem beispielsweise schädliche Laserstrahlung von der Bearbeitungsstelle 20 in die Umgebung emittiert werden kann.

Abschirmungslücken werden außerdem dadurch geschlossen, dass die einzelnen Abschirmungseinheiten 13 relativ zueinander um die Vorrichtungsachse 7 gedreht werden. Erzeugt etwa die Abkantung 24 an einer Abschirmungseinheit 13 eine Abschirmungslücke, so wird wenigstens eine der anderen Abschirmungseinheiten 13 um die Vorrichtungsachse 7 in eine Drehstellung überführt, in welcher sie die entstandene Abschirmungslücke überdeckt.

Die Abstände der freien Enden der Abschirmungselemente 18 von der Oberseite der Blechtafel 5 können unterschiedlich sein. Beispielsweise können nahe der Bearbeitungsstelle 20 angeordnete Abschirmungselemente 18, die aufgrund der dort herrschenden extremen Verhältnisse in der Regel relativ fest und folglich starr sein müssen, geringfügig von der Oberseite der Blechtafel 5 beabstandet sein, damit sie die Relativbewegung von Blechtafel 5 und Abschirmungsvorrichtung 8 nicht behindern und insbesondere bei der Blechbewegung keine Kratzer an der Oberfläche der Blechtafel 5 verursachen. Abschirmungselemente 18, die weiter von der Bearbeitungsstelle 20 entfernt und folglich geringeren Beanspruchungen unterworfen sind, können verhältnismäßig weich ausgebildet sein und folglich auf der Oberseite der Blechtafel 5 aufsitzen, ohne dass eine Behinderung der Blechbewegung bzw. eine Kratzerbildung an der Blechtafel 5 zu befürchten wäre. Auch ist es möglich, über die Abschirmungseinheiten 13 bzw. deren Abschirmungselemente 18 in Richtung der Vorrichtungsachse 7 Druck auf die Blechtafel 5 auszuüben, um auf diese Art und Weise ein "Flattern" der Blechtafel 5 insbesondere bei hohen Verfahrgeschwindigkeiten der Blechtafel 5 zu verhindern.

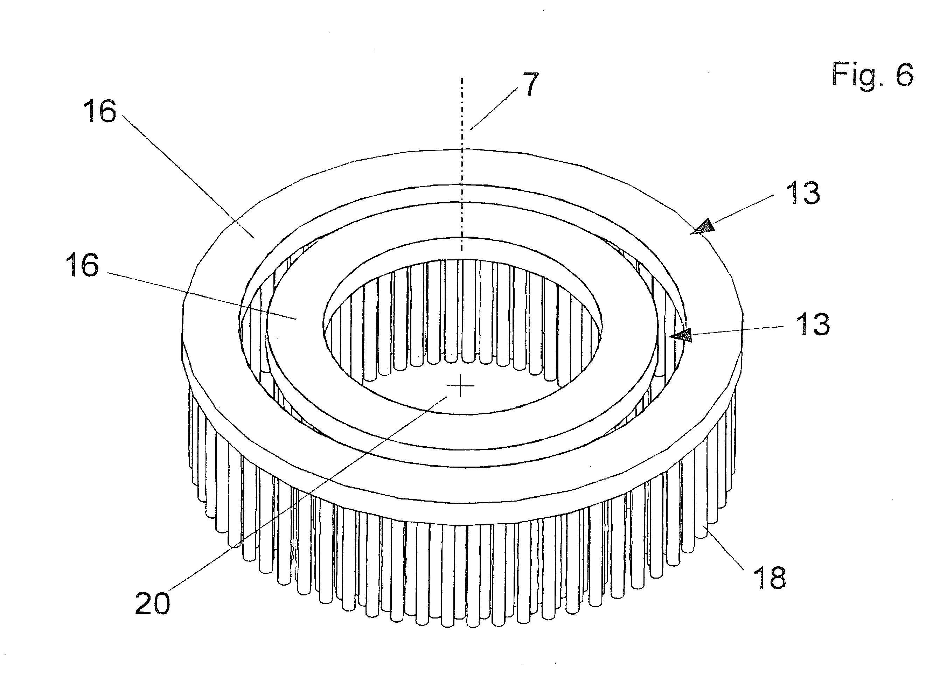

Abweichend von der Verhältnissen gemäß den Figuren 1 bis 4a sind im Falle der Anordnung nach Figur 6 lediglich zwei Abschirmungseinheiten 13 vorgesehen. Auch die Abschirmungseinheiten 13 gemäß Figur 6 sind relativ zueinander um die Vorrichtungsachse 7 drehbeweglich. Ebenso wie im Falle der Abschirmungseinheiten 13 gemäß den Figuren 1 bis 4a sind an jeder der Elementhalterungen 16 der in Figur 6 gezeigten Abschirmungseinheiten 13 borstenartige Abschirmungselemente 18 vorgesehen, die mehrere sowohl in radialer Richtung der Vorrichtungsachse 7 als auch in Umfangsrichtung um die Vorrichtungsachse 7 gegeneinander versetzte Element- bzw. Borstenreihen ausbilden.

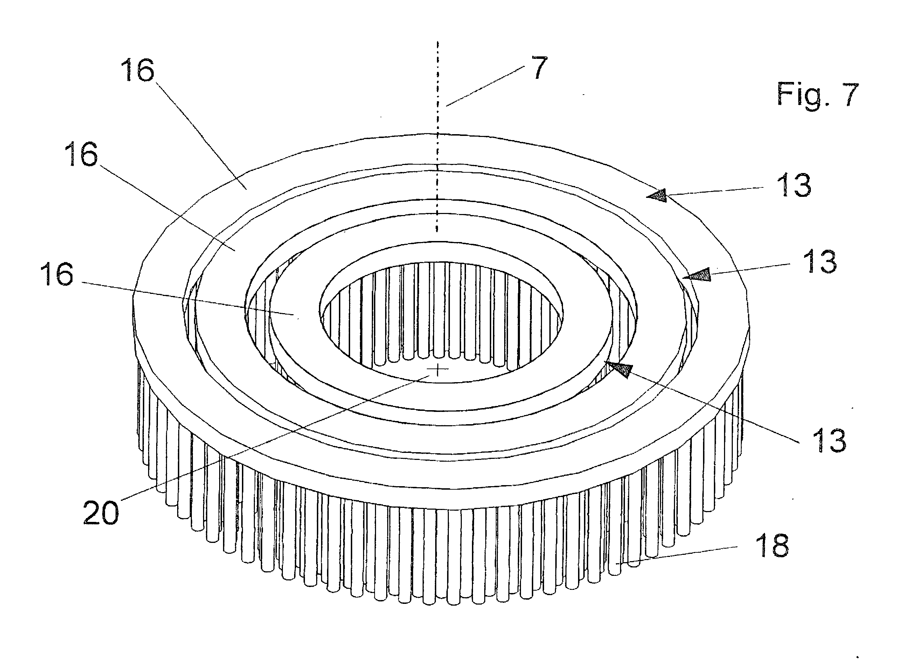

Figur 7 zeigt drei konzentrische Abschirmungseinheiten 13, von denen lediglich die beiden radial innen liegenden Abschirmungseinheiten 13 relativ zueinander um die Vorrichtungsachse 7 bewegbar sind. Die radial außen liegende Abschirmungseinheit 13 ist starr an der Grundplatte 14 der Abschirmungsvorrichtung 8 befestigt.

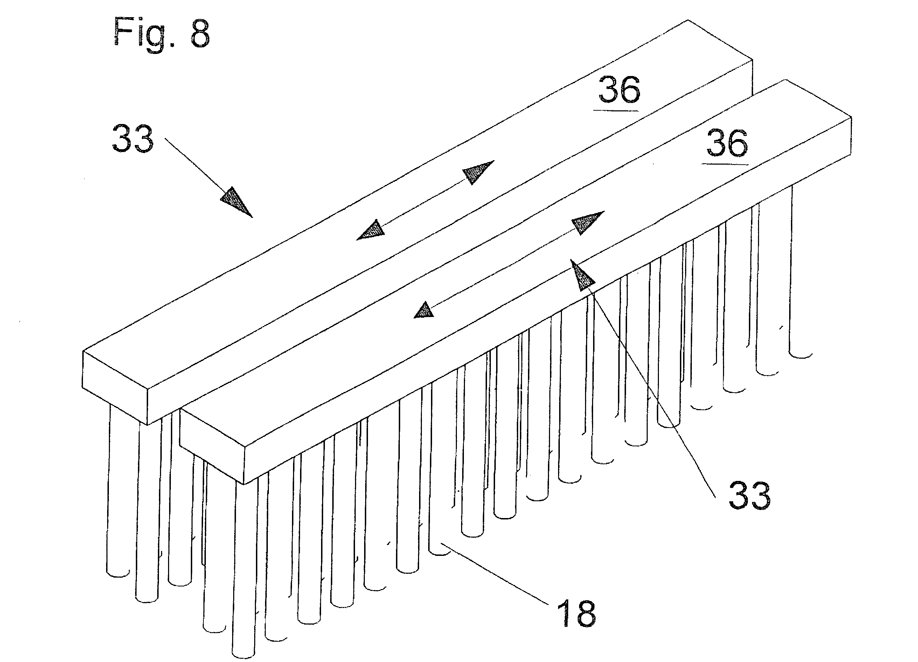

Gemäß Figur 8 sind Abschirmungseinheiten 33 vorgesehen, die abweichend von den zuvor beschriebenen Abschirmungseinheiten 13 die Vorrichtungsachse 7 nicht umgreifen sondern vielmehr krümmungslos mit geradlinigen Elementhalterungen 36 ausgebildet sind. Dementsprechend sind die Abschirmungseinheiten 33 auch nicht relativ zueinander drehbeweglich sondern relativ zueinander längsverschiebbar. Die Bewegungsmöglichkeiten der Abschirmungseinheiten 33 quer zu der Vorrichtungsachse 7 sind in Figur 6 durch Doppelpfeile angedeutet. Um einen Bearbeitungsstrahl 19 bzw. eine Bearbeitungsstelle 20 mittels Abschirmungseinheiten 33 der in Figur 8 gezeigten Art möglichst umfassend gegen die Umgebung abzuschirmen, sind Paare von Abschirmungseinheiten 33 beispielsweise rechteckförmig oder nach Art eines Vielecks um die Vorrichtungsachse 7 herum anzuordnen. Auch die Relativbewegung der Abschirmungseinheiten 33 kann motorlos durch die Bewegung der Blechtafel 5 oder mittels eines vorzugsweise numerisch gesteuerten motorischen Antriebes bewirkt werden.

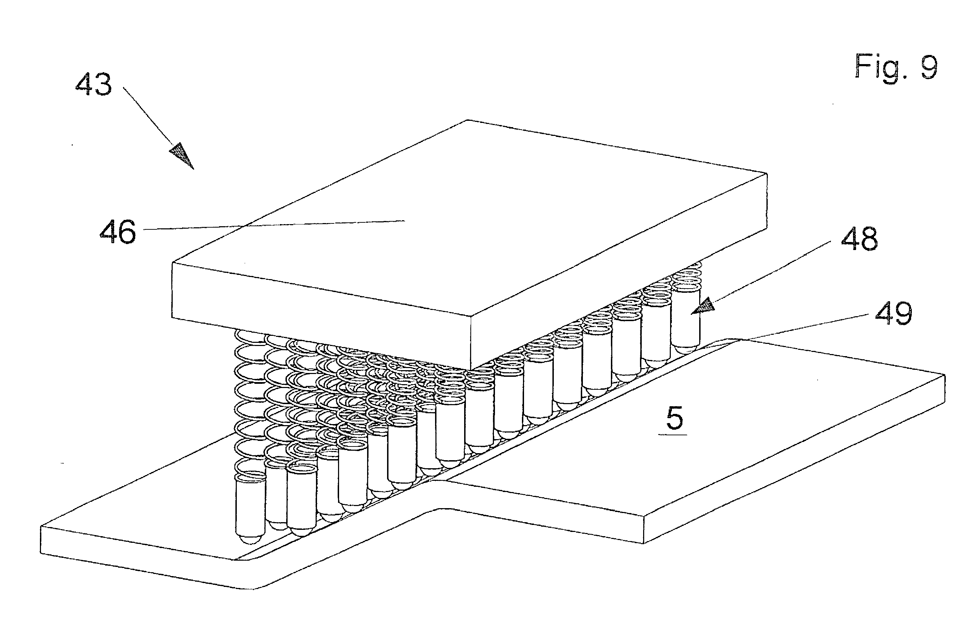

In Figur 9 ist eine Abschirmungseinheit 43 dargestellt, die beispielsweise mit relativ zueinander beweglichen Abschirmungseinheiten 33 gemäß Figur 8 kombiniert werden kann. Die Abschirmungseinheit 43 weist an einer Elementhalterung 46 als Abschirmungselemente 48 federbelastete Stifte auf, die an ihren freien Enden mit allseitig drehbar gelagerten Kugeln 49 auf der Blechtafel 5 aufsitzen.

Infolge der Kugellagerung kann die Blechtafel 5 reibungsarm und kratzerfrei unter der Abschirmungseinheit 43 hindurch bewegt werden. Aufgrund der federnden Lagerung der Abschirmungselemente 48 passt sich die Abschirmungseinheit 43 flexibel an unterschiedliche Oberflächenformen der Blechtafel 5 an.

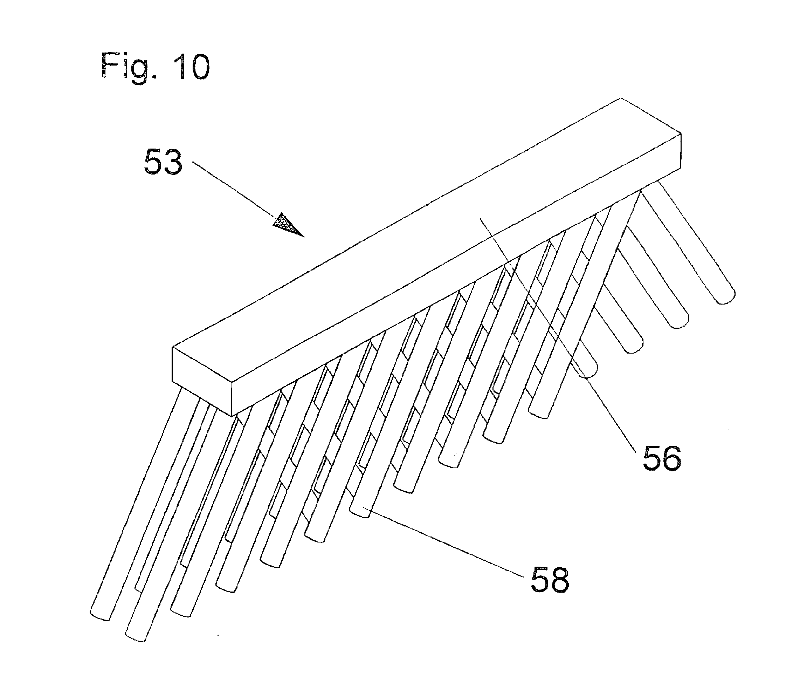

Figur 10 zeigt eine Abschirmungseinheit 53, die beispielsweise nach Art der Abschirmungseinheiten 33 gemäß Figur 8 mit einer zweiten, relativ zu ihr beweglichen Abschirmungseinheit 53 kombiniert werden kann. Anders als die zuvor beschriebenen Abschirmungseinheiten 13, 33, 43 ist die Abschirmungseinheit 53 an einer Elementhalterung 56 mit schräg gestellten Abschirmungselementen 58 versehen. Diese sind als Borsten ausgeführt und in mehreren nebeneinander liegenden Reihen angeordnet. Die Borsten einander benachbarter Reihen sind in einander entgegengesetzten Richtungen geneigt.

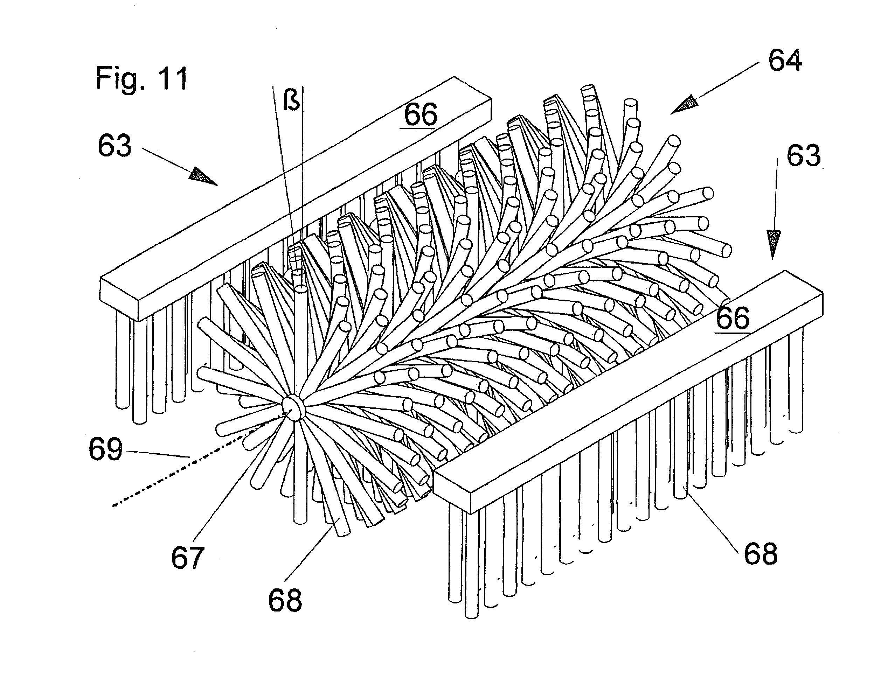

Gemäß Figur 11 sind zwei geradlinige Abschirmungseinheiten 63 mit einer walzenartigen Abschirmungseinheit 64 kombiniert. Die Abschirmungseinheiten 63, 64 sind im eingebauten Zustand in radialer Richtung der Vorrichtungsachse 7 gegeneinander versetzt. An Elementhalterungen 66 der Abschirmungseinheiten 63 sowie an einer von einer Rotationswelle gebildeten Elementhalterung 67 der walzenartigen Abschirmungseinheit 64 sind Abschirmungselemente 68 in Form von Borsten angebracht. Die Abschirmungseinheit 64 ist um eine Drehachse 69 motorlos oder motorisch angetrieben drehbar und dadurch relativ zu den beiden außen liegenden Abschirmungseinheiten 63 beweglich. Alternativ oder zusätzlich können die Abschirmungseinheiten 63 längs der Drehachse 69 motorlos oder motorisch relativ zueinander und damit auch relativ zu der Abschirmungseinheit 64 beweglich sein. Die Abschirmungseinheit 64 weist eine Mehrzahl von in axialer Richtung der Elementhalterung 67 nebeneinander angeordneten Gruppen von Abschirmungselementen 68 auf. Die Abschirmungselemente 68 einer jeden Gruppe zeigen sternförmig von der Elementhalterung 67 weg. Einander benachbarte Gruppen von Abschirmungselementen 68 sind in Umfangsrichtung um die Drehachse 69 um einen Winkelbetrag (β) gegeneinander versetzt. Jedes endseitige Abschirmungselement 68 an der Abschirmungseinheit 64 stellt somit einen Startpunkt einer Spiralbahn dar, die sich um die Elementhalterung 67 windet.

Auch die Anordnung gemäß Figur 11 kann mit weiteren Abschirmungseinheiten zu einer den Bearbeitungsstrahl 19 bzw. die Bearbeitungsstelle 20 rechteckförmig oder nach Art eines Vielecks umgreifenden Abschirmung kombiniert werden.

## Patentansprüche

1. Bearbeitungskopf einer Bearbeitungsmaschine (1) zum Bearbeiten von Werkstücken (5), an welchem ein Bearbeitungsstrahl (19) austritt und der eine Abschirmungsvorrichtung aufweist, mittels derer der Bearbeitungsstrahl (19) und/oder eine Bearbeitungsstelle (20) des Bearbeitungsstrahls (19) an einem Werkstück (5) gegen die Umgebung abschirmbar ist, wobei die Abschirmungsvorrichtung wenigstens eine Abschirmungseinheit (13, 33, 43, 53, 63, 64) aufweist, die sich längs einer im Betrieb mit der Achse des Bearbeitungsstrahls (19) zusammenfallenden Vorrichtungsachse (7) erstreckt und die zumindest ein Abschirmungselement (18, 48, 58, 68) und eine das oder die Abschirmungselemente (18, 48, 58, 68) halternde Elementhalterung (16, 36, 46, 56, 66, 67) aufweist,
**dadurch gekennzeichnet, dass**
wenigstens zwei in radialer Richtung der Vorrichtungsachse (7) gegeneinander versetzt angeordnete Abschirmungseinheiten (13, 33, 43, 53, 63, 64) vorgesehen sind, deren Elementhalterungen (16, 36, 46, 56, 66, 67) bei einer bei der Werkstückbearbeitung ausgeführten Relativbewegung von Werkstück und Bearbeitungsstrahl (19) zur Abschirmung des Bearbeitungsstrahls (19) und/oder zur Abschirmung der Bearbeitungsstelle (20) des Bearbeitungsstrahls (19) gemeinschaftlich mit zugeordneten Abschirmungselementen (18, 48, 58, 68) relativ zueinander bewegbar sind.

2. Bearbeitungskopf nach Anspruch 1, **dadurch gekennzeichnet, dass** die Elementhalterungen (16, 36, 46, 56, 66, 67) von Abschirmungseinheiten (13, 33, 43, 53, 63, 64) gemeinschaftlich mit zugeordneten Abschirmungselementen (18, 48, 58, 68) längs der Vorrichtungsachse (7) relativ zueinander bewegbar sind.

3. Bearbeitungskopf nach Anspruch 1 oder 2, **dadurch gekennzeichnet, dass** die Elementhalterungen (16, 36, 46, 56, 66, 67) von Abschirmungseinheiten (13, 33, 43, 53, 63, 64) gemeinschaftlich mit zugeordneten Abschirmungselementen (18, 48, 58, 68) in Querrichtung der Vorrichtungsachse (7), insbesondere in Umfangsrichtung um die Vorrichtungsachse (7), relativ zueinander bewegbar sind.

4. Bearbeitungskopf nach einem der Ansprüche 1 bis 3, **dadurch gekennzeichnet, dass** relativ zueinander bewegbare Elementhalterungen (16, 36, 46, 56, 66, 67) von Abschirmungseinheiten (13, 33, 43, 53, 63, 64) bewegungsmäßig miteinander gekoppelt sind.

5. Bearbeitungskopf nach einem der Ansprüche 1 bis 4, **dadurch gekennzeichnet, dass** relativ zueinander bewegbare Elementhalterungen (16, 36, 46, 56, 66, 67) von Abschirmungseinheiten (13, 33, 43, 53, 63, 64) gegenläufig bewegbar sind.

6. Bearbeitungskopf nach einem der Ansprüche 1 bis 5, **dadurch gekennzeichnet, dass** Elementhalterungen (16, 36, 46, 56, 66, 67) von Abschirmungseinheiten (13, 33, 43, 53, 63, 64) mittels eines motorischen Antriebes (15) relativ zueinander bewegbar sind.

7. Bearbeitungskopf nach einem der Ansprüche 1 bis 6, **dadurch gekennzeichnet, dass** wenigstens eine Abschirmungseinheit (13) die Vorrichtungsachse (7) zumindest teilweise umgreift.

8. Bearbeitungskopf nach einem der Ansprüche 1 bis 7, **dadurch gekennzeichnet, dass** an wenigstens einer Abschirmungseinheit (13, 33, 43, 53, 63, 64) Abschirmungselemente (18, 48, 58, 68) vorgesehen sind, die in Querrichtung der Vorrichtungsachse (7) nachgiebig sind und dass an der von der Vorrichtungsachse (7) abliegenden Außenseite der Abschirmungselemente (18, 48, 58, 68) eine geschlossene Abdeckung (12), vorzugsweise ein Abschirmungsblech, vorgesehen ist, welche mit Abstand von den freien Enden der Abschirmungselemente (18, 48, 58, 68) endet.

9. Bearbeitungsmaschine zum Bearbeiten von Werkstücken, mit einem Bearbeitungskopf (6), an welchem ein Bearbeitungsstrahl (19) austritt und an welchem eine Abschirmungsvorrichtung (8) vorgesehen ist, mittels derer der Bearbeitungsstrahl (19) und/oder eine Bearbeitungsstelle (20) des Bearbeitungsstrahls (19) an einem Werkstück (5) gegen die Umgebung abschirmbar ist, **dadurch gekennzeichnet, dass** der Bearbeitungskopf nach einem der Ansprüche 1 bis 8 ausgebildet ist.

10. Bearbeitungsmaschine nach Anspruch 9, **dadurch gekennzeichnet, dass** bei der Bearbeitung eines Werkstücks (5) die Abschirmungsvorrichtung (8) und das Werkstück (5) relativ zueinander bewegt werden und dass aufgrund dieser Relativbewegung die Elementhalterungen (16, 36, 46, 56, 66, 67) von Abschirmungseinheiten (13, 33, 43, 53, 63, 64) der Abschirmungsvorrichtung (8) relativ zueinander bewegbar sind.

11. Bearbeitungsmaschine nach Anspruch 9 oder 10, **dadurch gekennzeichnet, dass** die Abschirmungsvorrichtung (8) nach Anspruch 6 ausgebildet ist und dass für den motorischen Antrieb (15) für die Relativbewegung der Elementhalterungen (16, 36, 46, 56, 66, 67) von Abschirmungseinheiten (13, 33, 43, 53, 63, 64) eine numerische Steuereinheit (11) vorgesehen ist, die mit wenigstens einer weiteren Steuereinheit der Bearbeitungsmaschine zusammenwirkt.

12. Bearbeitungsmaschine nach einem der Ansprüche 9 bis 11 in Form einer Laserbearbeitungsmaschine, vorzugsweise in Form einer Kombi-Maschine oder einer Laser-Flachbettmaschine, mit einem Bearbeitungskopf (6) in Form eines Laserbearbeitungskopfes, an welchem als Bearbeitungsstrahl (19) ein Laserbearbeitungsstrahl austritt.

13. Bearbeitungsmaschine nach einem der Ansprüche 9 bis 12 in Form einer Laserbearbeitungsmaschine, vorzugsweise in Form einer Kombi-Maschine oder einer Laser-Flachbettmaschine, mit einem Bearbeitungskopf (6) in Form eines Laserbearbeitungskopfes, an welchem als Bearbeitungsstrahl (19) ein Laserbearbeitungsstrahl austritt, dessen Wellenlänge nahe dem sichtbaren Bereich oder in dem sichtbaren Bereich liegt und der vorzugsweise von einem Festkörperlaser stammt.

## Claims

1. Processing head of a processing machine (1) for processing workpieces (5), at which a processing beam (19) is discharged and which has a shielding device, by means of which the processing beam (19) and/or a processing location (20) of the processing beam (19) on a workpiece (5) can be shielded against the environment, the shielding device having at least one shielding unit (13, 33, 43, 53, 63, 64) which extends along a device axis (7) which coincides with the axis of the processing beam (19) during operation and which has at least one shielding element (18, 48, 58, 68) and an element retention member (16, 36, 46, 56, 66, 67) which retains the shielding element(s) (18, 48, 58, 68),
**characterised in that**
there are provided at least two shielding units (13, 33, 43, 53, 63, 64) which are arranged in a state offset relative to each other in a radial direction of the device axis (7) and whose element retention members (16, 36, 46, 56, 66, 67) can be moved relative to each other during a relative movement of the workpiece and processing beam (19) carried out during the workpiece processing operation in order to shield the processing beam (19) and/or in order to shield the processing location (20) of the processing beam (19) together with associated shielding elements (18, 48, 58, 68).

2. Processing head according to claim 1, **characterised in that** the element retention members (16, 36, 46, 56, 66, 67) of shielding units (13, 33, 43, 53, 63, 64) can be moved relative to each other along the device axis (7) together with associated shielding elements (18, 48, 58, 68).

3. Processing head according to claim 1 or claim 2, **characterised in that** the element retention members (16, 36, 46, 56, 66, 67) of shielding units (13, 33, 43, 53, 63, 64) can be moved relative to each other together with associated shielding elements (18, 48, 58, 68) in the transverse direction of the device axis (7), in particular in the peripheral direction about the device axis (7).

4. Processing head according to any one of claims 1 to 3, **characterised in that** element retention members (16, 36, 46, 56, 66, 67) of shielding units (13, 33, 43, 53, 63, 64) that can be moved relative to each other are coupled to each other in terms of movement.

5. Processing head according to any one of claims 1 to 4, **characterised in that** element retention members (16, 36, 46, 56, 66, 67) of shielding units (13, 33, 43, 53, 63, 64) that can be moved relative to each other can be moved in opposing directions.

6. Processing head according to any one of claims 1 to 5, **characterised in that** element retention members (16, 36, 46, 56, 66, 67) of shielding units (13, 33, 43, 53, 63, 64) can be moved relative to each other by means of a motorised drive (15) .

7. Processing head according to any one of claims 1 to 6, **characterised in that** at least one shielding unit (13) at least partially surrounds the device axis (7).

8. Processing head according to any one of claims 1 to 7, **characterised in that** there are provided on at least one shielding unit (13, 33, 43, 53, 63, 64) shielding elements (18, 48, 58, 68) which are flexible in the transverse direction of the device axis (7) and **in that** there is provided at the outer side of the shielding elements (18, 48, 58, 68) remote from the device axis (7) a closed cover (12), preferably a shielding metal sheet, which terminates with spacing from the free ends of the shielding elements (18, 48, 58, 68) .

9. Processing machine for processing workpieces, having a processing head (6), at which a processing beam (19) is discharged and on which there is provided a shielding device (8), by means of which the processing beam (19) and/or a processing location (20) of the processing beam (19) on a workpiece (5) can be shielded against the environment, **characterised in that** the processing head is constructed in accordance with any one of claims 1 to 8.

10. Processing machine according to claim 9, **characterised in that**, when a workpiece (5) is processed, the shielding device (8) and the workpiece (5) are moved relative to each other and **in that**, owing to this relative movement, the element retention members (16, 36, 46, 56, 66, 67) of shielding units (13, 33, 43, 53, 63, 64) of the shielding device (8) can be moved relative to each other.

11. Processing machine according to claim 9 or 10, **characterised in that** the shielding device (8) is constructed in accordance with claim 6 and **in that** there is provided for the motorised drive (15) for the relative movement of the element retention members (16, 36, 46, 56, 66, 67) of shielding units (13, 33, 43, 53, 63, 64) a numerical control unit (11) which cooperates with at least one additional control unit of the processing machine.

12. Processing machine according to any one of claims 9 to 11 in the form of a laser processing machine, preferably in the form of a combi-machine or a laser flat-bed machine, having a processing head (6) in the form of a laser processing head at which a laser processing beam is discharged as a processing beam.

13. Processing machine according to any one of claims 9 to 12 in the form of a laser processing machine, preferably in the form of a combi-machine or a laser flat-bed machine, having a processing head (6) in the form of a laser processing head at which there is discharged as a processing beam (19) a laser processing beam whose wavelength is close to the visible range or is in the visible range, and which preferably originates from a solid state laser.

## Revendications

1. Tête d'usinage d'une machine d'usinage (1) pour l'usinage de pièces (5), sur laquelle sort un faisceau d'usinage (19) et qui présente un dispositif de masquage au moyen duquel le faisceau d'usinage (19) et/ou un point d'usinage (20) du faisceau d'usinage (19) sur une pièce (5) peut être masqué vis-à-vis de l'environnement, sachant que le dispositif de masquage présente au moins une unité de masquage (13, 33, 43, 53, 63, 64), qui s'étend le long d'un axe de dispositif (7) coïncidant en service avec l'axe du faisceau d'usinage (19), et qui présente au moins un élément de masquage (18, 48, 58, 68) et un support d'élément (16, 36, 46, 56, 66, 67) maintenant le ou les éléments de masquage (18, 48, 58, 68),
**caractérisée en ce qu'**il est prévu au moins deux unités de masquage (13, 33, 43, 53, 63, 64) disposés en décalage mutuel dans la direction radiale de l'axe (7) du dispositif, unités dont les supports d'éléments (16, 36, 46, 56, 66, 67), lors d'un mouvement relatif de la pièce et du faisceau d'usinage (19) effectué pour l'usinage de la pièce, peuvent être déplacés les uns par rapport aux autres, conjointement avec les éléments de masquage associés (18, 48, 58, 68), pour masquer le faisceau d'usinage (19) et/ou pour masquer le point d'usinage (20) du faisceau d'usinage (19).

2. Tête d'usinage selon la revendication 1, **caractérisée en ce que** les supports d'éléments (16, 36, 46, 56, 66, 67) d'unités de masquage (13, 33, 43, 53, 63, 64) peuvent être déplacés les uns par rapport aux autres, conjointement avec les éléments de masquage associés (18, 48, 58, 68), le long de l'axe (7) du dispositif.

3. Tête d'usinage selon la revendication 1 ou 2, **caractérisée en ce que** les supports d'éléments (16, 36, 46, 56, 66, 67) d'unités de masquage (13, 33, 43, 53, 63, 64) peuvent être déplacés les uns par rapport aux autres, conjointement avec les éléments de masquage associés (18, 48, 58, 68), en direction transversale à l'axe (7) du dispositif, en particulier en direction circonférentielle autour de l'axe (7) du dispositif.

4. Tête d'usinage selon l'une des revendications 1 à 3, **caractérisée en ce que** des supports d'éléments (16, 36, 46, 56, 66, 67) mobiles les uns par rapport aux autres d'unités de masquage (13, 33, 43, 53, 63, 64) sont couplés entre eux en déplacement.

5. Tête d'usinage selon l'une des revendications 1 à 4, **caractérisée en ce que** des supports d'éléments (16, 36, 46, 56, 66, 67) mobiles les uns par rapport aux autres d'unités de masquage (13, 33, 43, 53, 63, 64) peuvent être déplacés en sens contraires.

6. Tête d'usinage selon l'une des revendications 1 à 5, **caractérisée en ce que** les supports d'éléments (16, 36, 46, 56, 66, 67) d'unités de masquage (13, 33, 43, 53, 63, 64) peuvent être déplacés les uns par rapport aux autres au moyen d'un entraînement motorisé (15).

7. Tête d'usinage selon l'une des revendications 1 à 6, **caractérisée en ce qu'**au moins une unité de masquage (13) entoure au moins partiellement l'axe (7) du dispositif.

8. Tête d'usinage selon l'une des revendications 1 à 7, **caractérisée en ce que**, sur au moins une unité de masquage (13, 33, 43, 53, 63, 64), il est prévu des éléments de masquage (18, 48, 58, 68) qui sont flexibles en direction transversale à l'axe (7) du dispositif, et **en ce que**, sur le côté extérieur des éléments de masquage (18, 48, 58, 68), éloigné de l'axe (7) du dispositif, il est prévu un élément de recouvrement fermé (12), de préférence une tôle de masquage, qui se termine à distance des extrémités libres des éléments de masquage (18, 48, 58, 68).

9. Machine d'usinage pour l'usinage de pièces, avec une tête d'usinage (6) sur laquelle sort un faisceau d'usinage (19) et sur laquelle est prévu un dispositif de masquage (8) au moyen duquel le faisceau d'usinage (19) et/ou un point d'usinage (20) du faisceau d'usinage (19) sur une pièce (5) peut être masqué vis-à-vis de l'environnement, **caractérisée en ce que** la tête d'usinage est réalisée selon l'une des revendications 1 à 8.

10. Machine d'usinage selon la revendication 9, **caractérisée en ce que**, lors de l'usinage d'une pièce (5), le dispositif de masquage (8) et la pièce (5) sont déplacés l'un par rapport à l'autre, et **en ce que**, sur la base de ce mouvement relatif, les supports d'éléments (16, 36, 46, 56, 66, 67) d'unités de masquage (13, 33, 43, 53, 63, 64) du dispositif de masquage (8) peuvent être déplacés les uns par rapport aux autres.

11. Machine d'usinage selon la revendication 9 ou 10, **caractérisée en ce que** le dispositif de masquage (8) est réalisé selon la revendication 6, et **en ce que**, pour l'entraînement motorisé (15) pour le mouvement relatif des supports d'éléments (16, 36, 46, 56, 66, 67) d'unités de masquage (13, 33, 43, 53, 63, 64), il est prévu une unité de commande numérique (11) qui coopère avec au moins une autre unité de commande de la machine d'usinage.

12. Machine d'usinage selon l'une des revendications 9 à 11 sous la forme d'une machine d'usinage au laser, de préférence sous la forme d'une machine combinée ou d'une machine laser à plat, avec une tête d'usinage (6) sous la forme d'une tête d'usinage laser sur laquelle un faisceau d'usinage laser sort comme faisceau d'usinage (19).

13. Machine d'usinage selon l'une des revendications 9 à 12 sous la forme d'une machine d'usinage au laser, de préférence sous la forme d'une machine combinée ou d'une machine laser à plat, avec une tête d'usinage (6) sous la forme d'une tête d'usinage laser sur laquelle sort, comme faisceau d'usinage (19), un faisceau d'usinage laser dont la longueur d'onde est proche de la plage visible ou se situe dans la plage visible et qui provient de préférence d'un laser solide.
